Europäisches Patentamt

European Patent Office

Office européen des brevets

(11) Publication number: **0 453 964 A1**

# EUROPEAN PATENT APPLICATION

(21) Application number: **91106250.3**

(22) Date of filing: **18.04.91**

(51) Int. Cl.5: **B62D 49/00**

(30) Priority: **24.04.90 JP 109361/90**

(43) Date of publication of application:
**30.10.91 Bulletin 91/44**

(84) Designated Contracting States:
**AT CH DE FR GB IT LI**

(71) Applicant: **YANMAR DIESEL ENGINE CO. LIMITED**
**1-32, Chaya-machi Kita-ku**
**Osaka 550(JP)**

(72) Inventor: **Yukio, Kubota**
**1-32, Chayamachi, Kita-ku**
**Osaka(JP)**
Inventor: **Noriyuki, Yamakawa**
**1-32, Chayamachi, Kita-ku**
**Osaka(JP)**
Inventor: **Takeshi, Hasebe**
**1-32, Chayamachi, Kita-ku**
**Osaka(JP)**

(74) Representative: **Henkel, Feiler, Hänzel & Partner**
**Möhlstrasse 37**
**W-8000 München 80(DE)**

(54) **Working vehicle.**

(57) A working vehicle constructed to be smaller in height and lower at the center of gravity so as to enable stable running and work on a slope or the like, in which a main transmission case (B) is disposed at about the center of a vehicle body, an engine (E) at one side of the main transmission case (B), a control unit and a seat (S) at the reverse side to the engine, and a connecting transmission case (A) is interposed between the engine and the main transmission case (B), in order to make the working vehicle lower at the center of gravity.

FIG.2

FIG.4

Field of the Invention

The present invention relates to a working vehicle constructed to be smaller in height and lower at the center of gravity so as to enable stable running and operation at a slope or the like.

Prior Art

Regarding a working vehicle lower at the center of gravity for working mainly at a slope, the art has hitherto been well known which is disclosed in the Japanese Patent Laid-Open Gazette No. Sho 59-169402.

Summary of the Invention

In order to obtain a working vehicle smaller in height, laterally balanced in weight, larger in width, and lower at the center of gravity, the present invention has been designed as follows:

A main transmission case is disposed at about the center of a body, an engine is disposed at one side of the main transmission case, a control unit and a seat are disposed at the reverse side to the engine, and a connecting transmission case is interposed between the engine and the main transmission case.

A power transmission case of the working vehicle, which comprises the main transmission case and a connecting transmission case, is constructed to be " Γ"-like-shaped and provided at the front end with a laterally projecting portions, so that the engine is supported to the front end projection from the rear thereof in a cantilever fashion.

The main transmission case and connecting transmission case constitute the power transmission case in a " Γ"-like shape, and within the connecting transmission case are disposed main clutch means together with speed change gears.

The power transmission case comprising the connecting transmission case and main transmission case is disposed at about the center of vehicle body, a body frame laterally projects from below the connecting transmission case, and rear axle housings laterally project from a rear axle case.

Also, at one side of the power transmission case constructed as the above-mentioned is disposed the engine, the seat is disposed at the reverse side thereto, the engine and seat are covered with a body cover formed to be high at the engine covering portion and lower at the seat covering portion, and control levers are disposed above the central power transmission case and formed lower than the engine covering portion at the body cover.

Brief Description of the Drawings

Fig. 1 is an entire side view of a working vehicle of the present invention,

Fig. 2 is a plane view of the same, from which safety frames 26 and 27 and a hood 29 are removed,

Fig. 3 is a rear view of the same,

Fig. 4 is a plane view of the same, from which a body cover C is removed,

Fig. 5 is a plane view of a power transmission case of " Γ"-like shape,

Fig. 6 is a partially sectional plane view of a connecting transmission case A,

Fig. 7 is a partially sectional side view of a connecting transmission case A,

Fig. 8 is a side view showing arrangement of a steering handle 28 and a steering valve 16,

Fig. 9 is a side view showing a straw chip enter preventing unit at a front power takeoff shaft 68,

Fig. 10 is a sectional view taken on the line X - X in Fig. 9,

Fig. 11 is a plane view of the state where the vehicle which is longitudinally and laterally provided with mowers,

Fig. 12 is a plane view showing structure of a body frame,

Fig. 13 is a side view of the same, and

Fig. 14 is a rear view of the same.

Description of the Preferred Embodiment

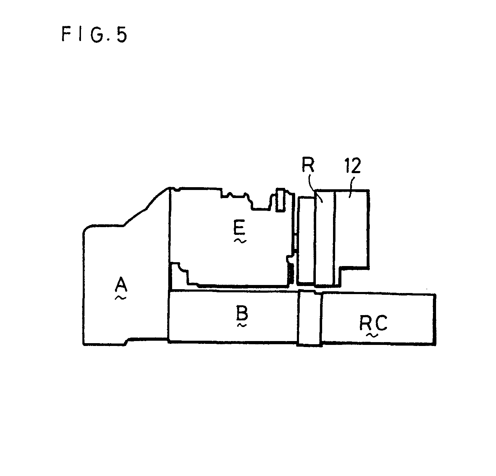

A body supporting member at the working vehicle of the present invention, as shown in Fig. 5, connects a connecting transmission case A with a main transmission case to form a " Γ"-like-shaped power transmission case so that an engine E is attached in a cantilever fashion to the connecting transmission case A at the front lateral projection of the " Γ"-like-shaped power transmission case, and a radiator R is attached to the rear surface of the engine. The main transmission case is composed of a transmission case B and a rear axle case RC, so that the connecting transmission case A is attached to the front end of the transmission case B so as to constitute the " Γ"-like shaped power transmission case.

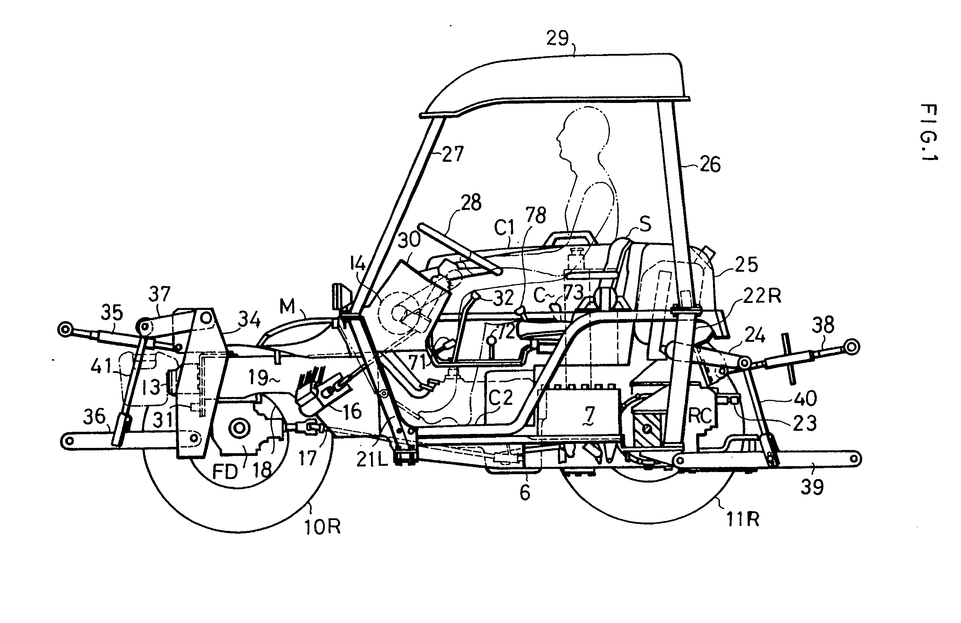

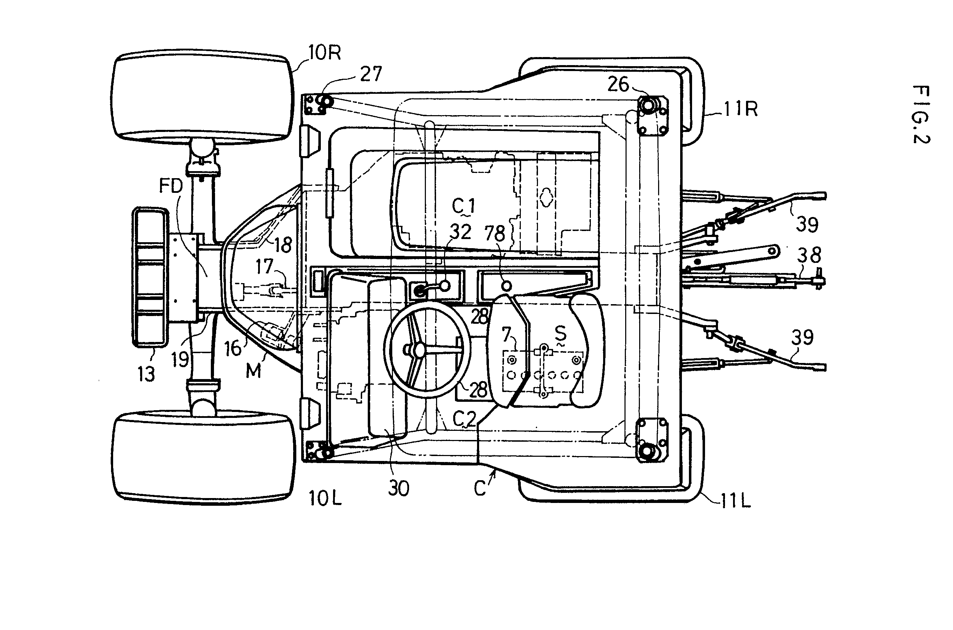

Next, a working vehicle of an embodiment of the present invention will be described in Figs. 1 and 2, in which front wheels 10L and 10R and rear wheels 11L and 11R support a vehicle body, the front wheels 10L and 10R being driven by a front differential case FD.

At the center of the body is disposed a power transmission case of " Γ"-like shape for constituting a vehicle body supporting member shown in Fig. 5. The power transmission case, as above-mentioned, connects a connecting transmission case A and a main transmission case which comprises a transmission case B and a rear axle case RC.

The body rises rightwardly from the center, and the " Γ"-like-shaped power transmission case, an engine E, and a radiator R, are disposed at the body.

At a left side portion of the body in the forward moving direction of the vehicle are disposed a steering handle 28, a seat S and a battery 7 thereunder.

Below the steering handle 28 and seat S, the " Γ"-like-shaped power transmission case, engine E and radiator R are covered with a body cover C. The body cover C is made higher at part of an engine cover portion C1 for covering the engine E. Conversely, a step and seat covering portion C2 for covering the seat S and the step, is made lower.

Also, the power transmission case is lower at the upper portion between the engine covering part C1 and the step and seat covering part C2.

At the above-mentioned portion, as shown in Fig. 1, are disposed a longitudinal power takeoff (PTO) clutch lever 71, a main speed change gear 32, a front drive clutch lever 72, a sub speed change lever 78, and a hydraulic lift lever 73, which are constructed to be lower at the upper ends than the upper surface of engine covering part C1 so as not to be caught with any branch of a fruit-tree.

A front grille M projects from the fore end of body cover C.

As shown in Fig. 1, at the front of body, a front three-point linkage is composed of a top link 35 and lower links 36, so that a lift arm 37 vertically moves the lower links 36 through a lift link 41.

A front PTO shaft 31 is driven by part of connecting transmission case A.

The front three-point linkage is constituted between the laterally projecting brackets 34.

A three-point linkage is provided at the rear of the body, which comprises a top link 38 and lower links 39, the lower links 39 being vertically movable through a lift link 40, a rear PTO shaft 23 projecting rearwardly from the rear axle case RC.

A body frame 9 disposed at the front of the vehicle is disposed below the connecting transmission case A for constituting the " Γ"-like-shaped power transmission case, slanted support bars 21L and 21R are attached to both lateral ends of body frame 9, and safety frames 27 are fixed to mounting tables 20L and 20R at the upper ends of the slanted support bars 21L and 21R respectively. Similarly, at the rear housings H laterally projecting from the rear axle case RC, slanted support bars 22L and 22R and safety frames 26, are erected on mounting tables 8L and 8R at the upper ends of the slanted bars 22L and 22R respectively.

Between the front body frame 9 and the rear axle housings H are disposed a right-hand frame 76 and a left-hand frame 44 so as to form mounting portions for a working machine, such as mowers, to be mounted at the laterally operating side.

Above the four safety frames 26 and 27 is disposed a hood 29 to thereby form a safety frame as a whole.

In front of the steering handle 28 and at the lateral side of front frames 18 and 19 is disposed a steering valve 16 covered with the front grille M. In Fig. 1, reference numeral 30 designates a steering column for supporting the steering handle 28.

In a space in front of and above the engine is disposed an air cleaner 14, and the speed change lever 32 projects upwardly from the transmission case B.

An oil pan 6 is attached below the engine E and projects downwardly more than a side frame 44 for supporting thereon a stepped portion of the body cover C as shown in Fig. 1.

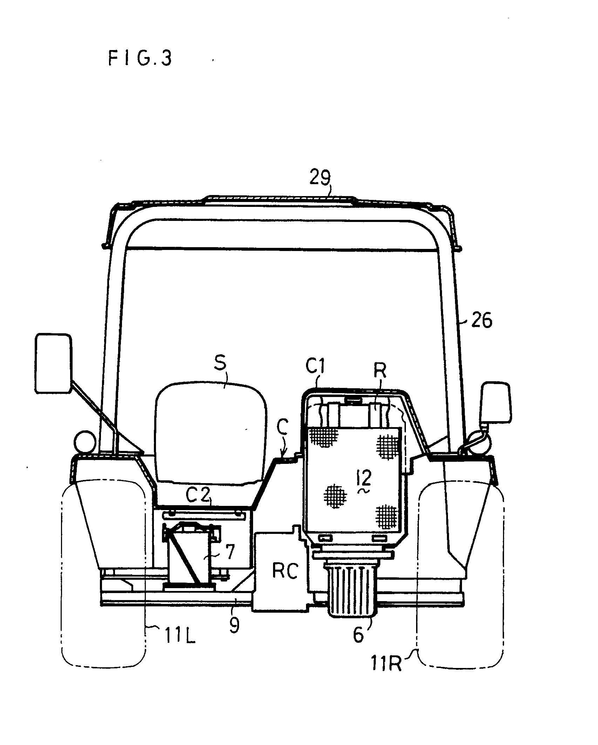

As shown in Fig. 3, the oil pan 6 is disposed rightwardly from the center between the right and left wheels.

Since the engine E is disposed at the right side of " Γ"-like-shaped power transmission case, the seat S is provided at the left side thereof and an operator is on the seat S, and, since the battery 7 is placed below the seat S, the body is laterally balanced.

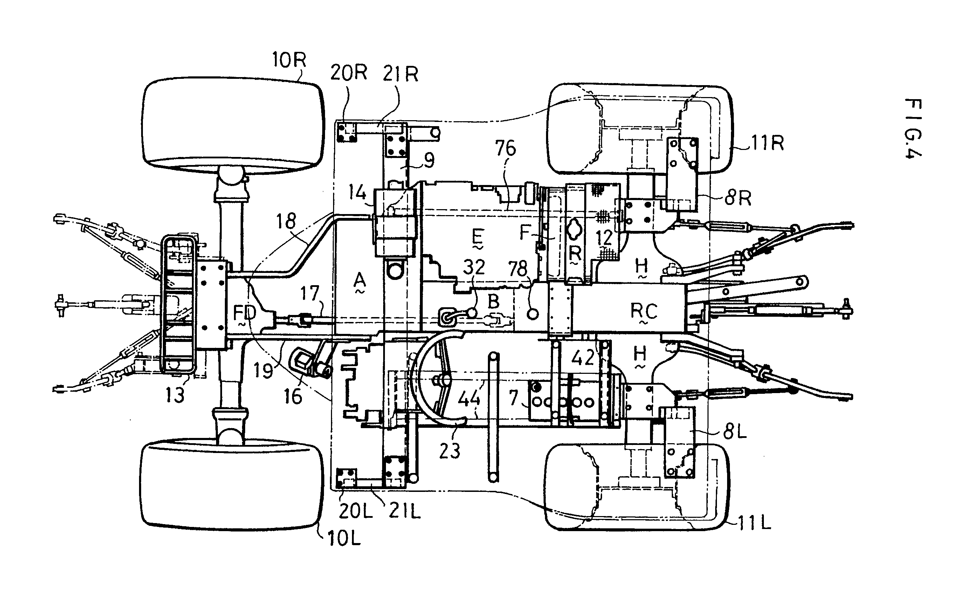

Next, explanation will be given on the state where the body cover C is removed from the body in Figs. 4 and 5. A front drive shaft 17 projects forwardly from the rear axle case RC so as to transmit power to the front differential case FD. A rear PTO drive shaft 43 extends rearwardly from the connecting transmission case A to the rear PTO shaft 23.

The radiator R is disposed behind the engine E, and a radiator fan F is disposed before the radiator R, a dust guard screen basket 12 being disposed at the rear thereof.

The side frame 44 is disposed longitudinally of the body and between a support frame 42 laterally projecting from the rear axle case RC and the body 9.

Front frames 18 and 19 forwardly project from the right and left side of connecting transmission case A. Since the connecting transmission case A is shifted rightwardly from the center line of body, the left-side front frame 19 projects straight forwardly, but the right-side front frame 18 bends halfway, a front weight retainer 13 being fixed to the front of the front frames 18 and 19.

To the right and left sides of front frames 18 and 19 are attached the brackets 34 between which the front three-point linkage is attached.

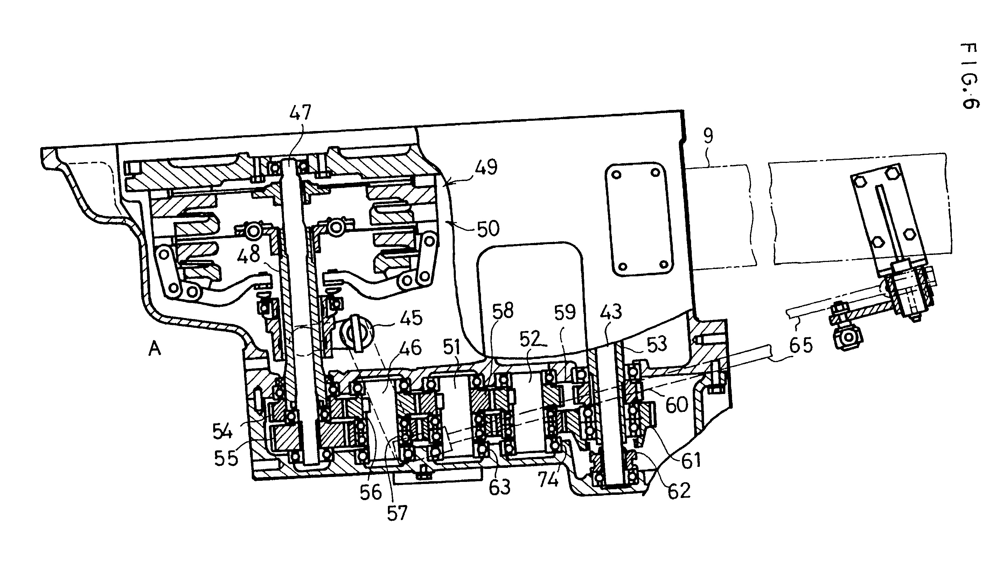

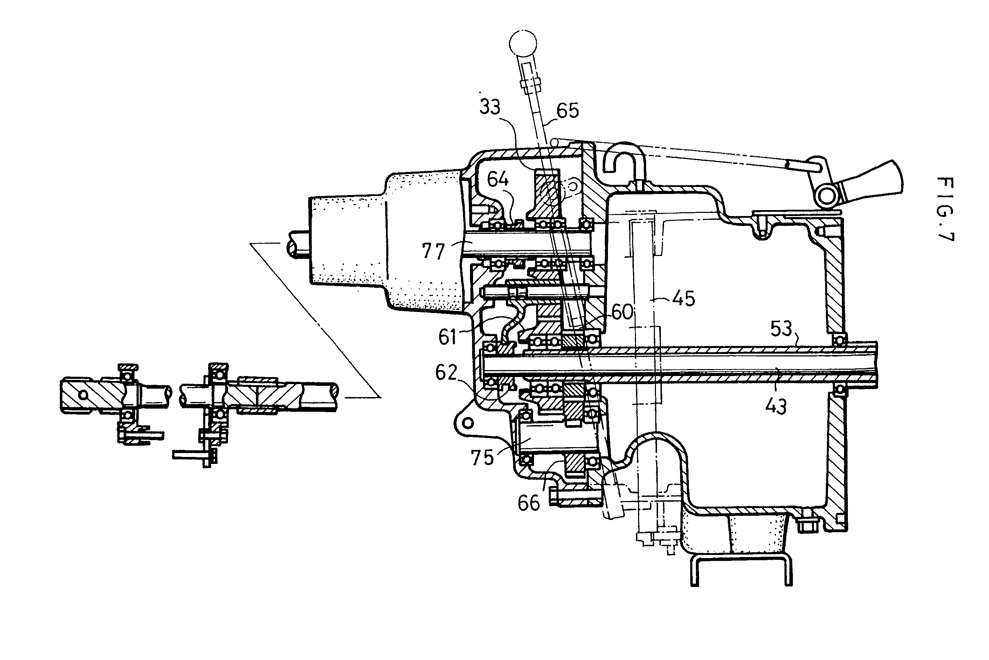

Next, explanation will be given on an internal construction of the connecting transmission case A with reference to Figs. 6 and 7.

At the left side of connecting transmission case A is constructed a clutch housing, in which an independent clutch mechanism is disposed, in other words, a running clutch 50 and a PTO clutch 49 are separately controllably constructed.

Both the clutches 49 and 50 are operable in such a manner that a clutch pedal provided on the body frame 9 is double trod so as to longitudinally rotate through a link 65 a clutch arm shaft 45 vertically pivoted within the connecting transmission case A, thereby rotating a clutch shifter.

The running clutch 50 intermittently connects rotation of a tubular running clutch shaft 48 so that the rotation thereof is transmitted to a gear 54. The rotation thereof is transmitted to a tubular shaft 53 through a gear 56 on a shaft 46, a gear 58 on a shaft 51, a gear 59 on a shaft 52, and a gear 66 on a shaft 75 in Fig. 7, the tubular shaft 53 transmitting power into the transmission case B to thereby change therein the running speed.

The intermitted rotation caused by the PTO clutch 49 is transmitted from a PTO clutch shaft 47 to a freely fitted gear 61 on a rear PTO drive shaft 43 through a gear 55 on the shaft 47, a gear 57 on the shaft 46, a gear 63 on the shaft 51, and a gear 74 on a shaft 52, whereby a clutch retainer 62 on the rear PTO drive shaft 43 is operated to intermittently transmit power to the rear PTO drive shaft 43.

The rear PTO drive shaft 43 transmits the power to the rear PTO shaft 23 in Fig. 1.

The free fitted gear 61 engages with a free fitted gear 83 on a front PTO drive shaft 77, so that a clutch retainer 64 on the front PTO drive shaft 77 intermittently transmits the power therefrom, the front PTO drive shaft 77 transmitting the power to the front PTO shaft 31 in Fig. 1.

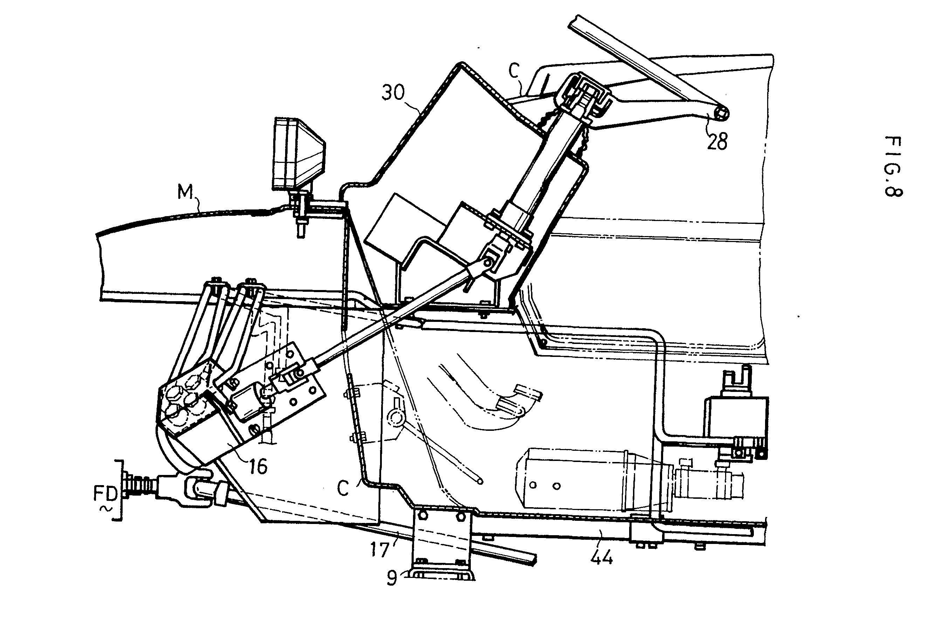

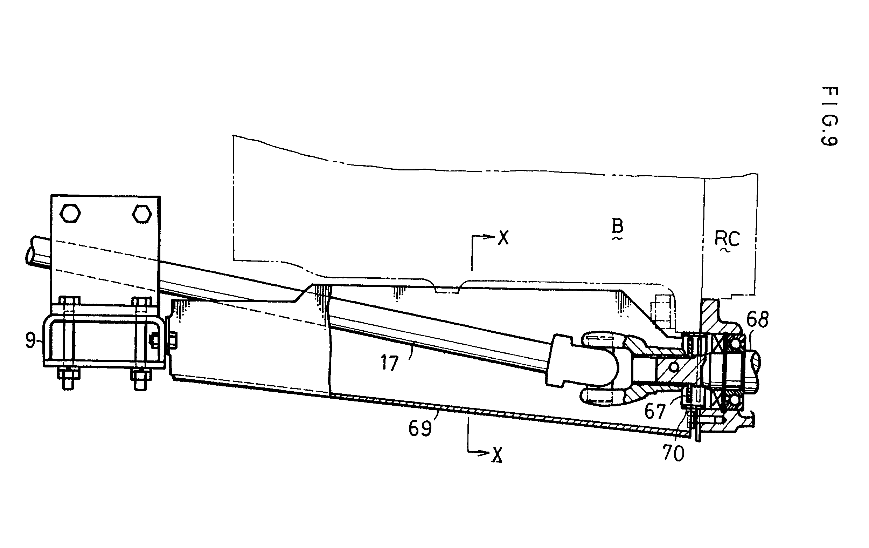

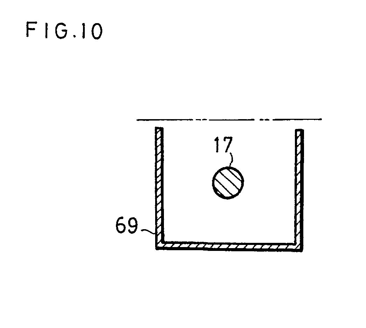

As shown in Figs. 8, 9 and 10, a front power takeoff shaft 68 forwardly projects from the rear axle case RC. An approach proof disc 67 is fixed to the front power takeoff shaft 68 and an approach proof cylinder 70 fixed to the rear axle case RC is inserted around the approach proof disc 67.

The front power takeoff shaft 68 is connected to the front drive shaft 17 through a joint and a shaft cover 69 for covering the front drive shaft 17 is interposed between the rear axle case RC and the body frame 9, the shaft cover 69 forwardly rising so that the working vehicle smaller in height is so constructed that the shaft cover 69 positioned to be easy to contact with the ground is adapted to be higher.

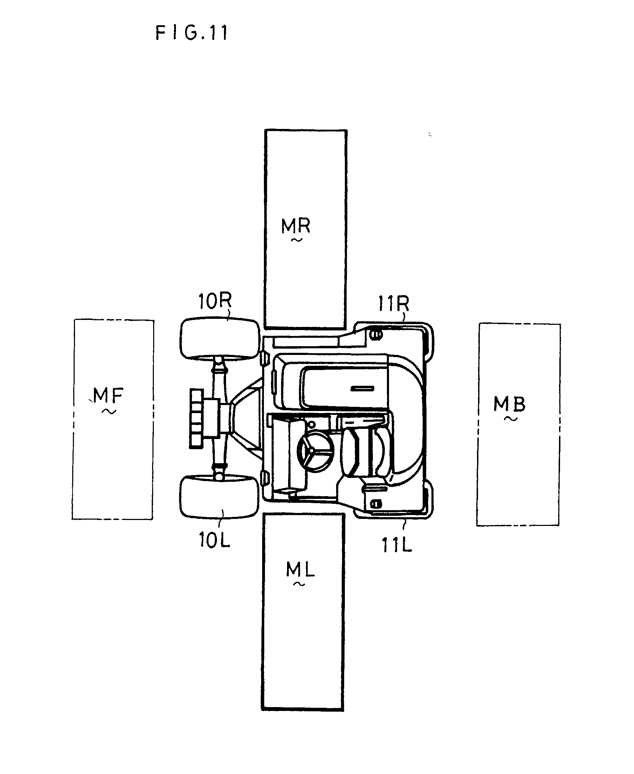

Next, the working vehicle of the present invention, as shown in Fig. 11, is longitudinally and laterally attached with working machines, such as mowers MF, ML, MR and MB.

Especially, the right-side and left-side mowers rise along the lateral sides of the body as the pivot points, thereby requiring a strong frame at the lateral sides, whereby the working vehicle of the present invention disposes thereat side frames 76 and 44.

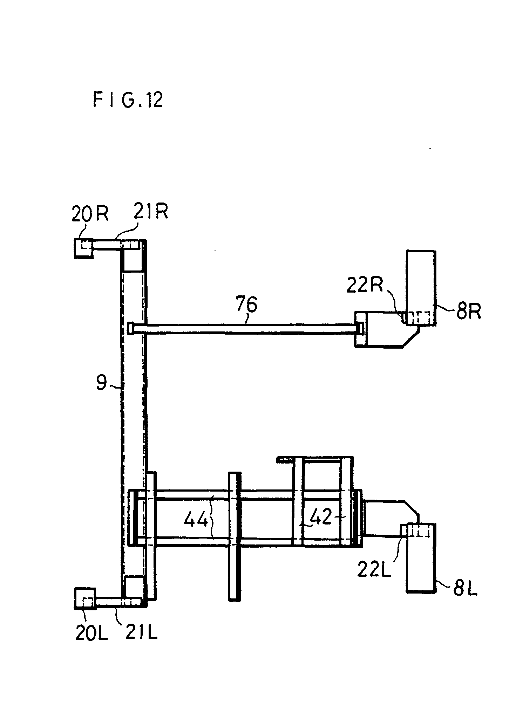

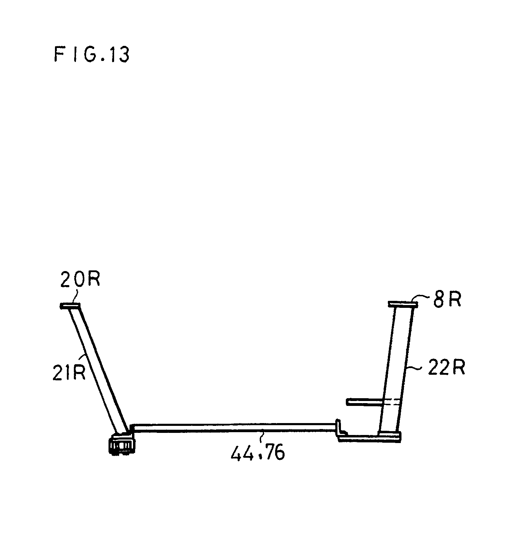

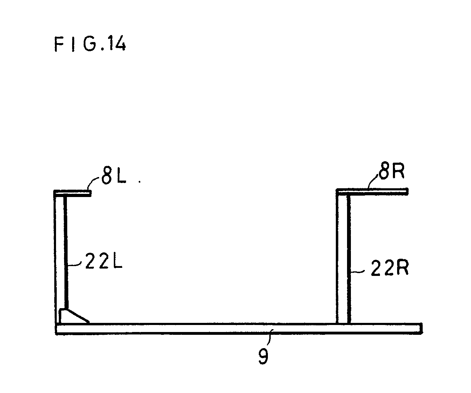

The relational positions of the body 9, rear axle housings H and side frames 76 and 44, are disclosed in Figs. 12, 13 and 14.

The working vehicle of the present invention is constructed as the above-mentioned, thereby being advantageous in the following points:

The main transmission case is disposed at about the center of the body, the engine is disposed at one side of the main transmission case, the operation portion and seat are disposed at the reverse side to the engine, and the connecting transmission case is interposed between the engine and the main transmission case, so that the engine can be disposed lower at substantially the same level as the main transmission case, thereby enabling the vehicle to be smaller in height. Since the engine is disposed at the one side of main transmission case, there is a fear that the body is unbalanced, but the operation portion and seat are disposed at the reverse side, thereby well laterally balancing the body in weight. Also, the main transmission case, connecting transmission casing A, engine E and seat, are not vertically overlapped, whereby the working vehicle larger in width and lower at the center of gravity can be constructed.

The power transmission case of the working vehicle, which comprises the main transmission case and connecting transmission case, is formed in a " Γ"-like shape having at the fore end the laterally projecting portions and the engine is supported in a cantilever fashion to the projection at the front end of the power transmission case of " Γ"-like shape, so that there is no need of using the engine as part of the body support member, thereby enabling the entire body frame to be lightweight.

Also, the main transmission case and connecting transmission case constitutes the power transmission case in a " Γ"-like shape and the main clutch means and speed change gears both are disposed in the connecting transmission case, whereby the speed change gears therein can reduce the speed of working vehicle and further the clutch means for the front PTO drive shaft and rear PTO drive shaft can be constituted. Thus, the PTO clutch means need not be provided within the transmission case or the rear axle case.

The power transmission case composed of the connecting transmission case and main transmission case is disposed substantially at the center of body, the body frame projects laterally from below the connecting transmission case, and the rear axle housings project laterally from the rear axle case, whereby, in a case of the working vehicle larger in width and smaller in height, there is no mounting position for the safety frame, but the body frame 9 projects laterally from below the power transmission case, thereby being usable as the support for the front safety frame at both ends of the above-mentioned part. It is possible to provide the seat S on the body frame 9, whereby the seat S need not be provided on the power transmission case as the conventional. Hence, such construction can make the vehicle further smaller in height.

Furthermore, the power transmission case constituted of the connecting transmission case and of main transmission case is disposed substantially at the center of body, the engine is disposed at one side of the power transmission case, the seat is disposed at the reverse side to the engine, the engine covering portion is higher and the seat covering portion is lower and both portions are covered with the body cover, the operating levers are disposed above the central power transmission case and put lower than the engine covering portion at the body cover, so that at the right side of the body cover C laterally wide is disposed the engine covering portion C1 upwardly projecting, and at the left side of the same, the lower step and seat covering portion C2 is disposed, whereby the cover lower at the center and for covering the power transmission case is obtained. Also, at the central portion, the operating levers, such as the main speed change lever 32, a hydraulic lift lever 73, and sub speed change lever 78, can be disposed. Hence, the levers each do not project at the upper ends from the engine covering portion C1 at the body cover C, whereby there is no fear that the levers are not caught with any low branch of fruit tree.

## Claims

1. A working vehicle characterized in that a main transmission case is disposed at about the center of a vehicle body, an engine is disposed at one side of said main transmission case, an operation portion and a seat are disposed at the reverse side to said engine, and a connecting transmission case is interposed between said engine and said main transmission case.

2. A working vehicle characterized in that a power transmission case comprising a main transmission case and a connecting transmission case at said working vehicle is formed in a " Γ"-like shape having at the fore end lateral projections, and an engine is supported from rear in a cantilever fashion to the front end projections at said " Γ"-like-shaped power transmission case.

3. A working vehicle characterized in that a main transmission case and a connecting transmission case form a power transmission case in a " Γ"-like shape, and main clutch means and speed change gears are together disposed in said connecting transmission case.

4. A working vehicle characterized in that a power transmission case comprising a connecting transmission case and a main transmission case is disposed at about the center of a vehicle body, a body frame laterally projects from below said connecting transmission case, and rear axle housings laterally project from a rear axle case.

5. A working vehicle characterized in that a power transmission case comprising a connecting transmission case and a main transmission case is disposed at about the center of a vehicle body, an engine is disposed at one side of said power transmission case, a seat is disposed at the reverse side to said engine, a body cover made higher at an engine covering portion and lower at a seat covering portion covers said engine and seat, operating levers are disposed above said central power transmission case, and said operating levers are constituted to be lower than said engine covering portion of said body cover.

FIG.1

FIG.2

FIG.3

FIG.4

FIG.5

FIG. 6

EP 0 453 964 A1

FIG.7

FIG.8

FIG.9

EP 0 453 964 A1

FIG.10

EP 0 453 964 A1

F I G.11

FIG.12

F I G.13

FIG.14

8L

8R

22L

22R

9

## DOCUMENTS CONSIDERED TO BE RELEVANT

EP 91106250.3

| Category | Citation of document with indication, where appropriate, of relevant passages | Relevant to claim | CLASSIFICATION OF THE APPLICATION (Int. Cl.5) |
|---|---|---|---|
| A | GB - A - 1 600 960<br><br>* Fig. 1 * | 1 | B 62 D 49/00 |
| A | FR - A1 - 2 595 649<br><br>* Fig. 1 * | 1 | |

**TECHNICAL FIELDS SEARCHED (Int. Cl.5)**

B 62 D

The present search report has been drawn up for all claims

| Place of search | Date of completion of the search | Examiner |
|---|---|---|
| VIENNA | 12-06-1991 | PANGRATZ |